(19) Europäisches Patentamt
European Patent Office
Office européen des brevets

(11) **EP 2 037 407 B1**

(12) **EUROPÄISCHE PATENTSCHRIFT**

(45) Veröffentlichungstag und Bekanntmachung des Hinweises auf die Patenterteilung:
**23.07.2014   Patentblatt 2014/30**

(51) Int Cl.:
***G06T 7/00*** *(2006.01)*

(21) Anmeldenummer: **07017987.4**

(22) Anmeldetag: **13.09.2007**

(54) **Verfahren zur Objekterfassung**

Method for detecting an object

Procédé de détection d'objet

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**18.03.2009   Patentblatt 2009/12**

(73) Patentinhaber: **Delphi Technologies, Inc.**
**Troy, MI 48007 (US)**

(72) Erfinder:
• **Ma, Guanglin**
**45143 Essen (DE)**
• **Park, Su-Birm**
**52457 Aldenhoven (DE)**
• **Ioffe, Alexander**
**53229 Bonn (DE)**

(74) Vertreter: **Robert, Vincent**
**Delphi France SAS**
**Bât. le Raspail - ZAC Paris Nord 2**
**22, avenue des Nations**
**CS 65059 Villepinte**
**95972 Roissy CDG Cedex (FR)**

(56) Entgegenhaltungen:
**US-A- 5 812 692**

• **MA, GUANGLIN ; PARK, SU-BIRM; IOFFE, ALEXANDER; MULLER-SCHNEIDERS, STEFAN; KUMMERT, ANTON: "A Real Time Object Detection Approach Applied to Reliable Pedestrian Detection" INTELLIGENT VEHICLES SYMPOSIUM, 2007 IEEE, 13. Juni 2007 (2007-06-13), - 15. Juni 2007 (2007-06-15) Seiten 755-760, XP002460337**
• **BERTOZZI ET AL: "Pedestrian detection by means of far-infrared stereo vision" COMPUTER VISION AND IMAGE UNDERSTANDING, ACADEMIC PRESS, SAN DIEGO, CA, US, Bd. 106, Nr. 2-3, 4. Mai 2007 (2007-05-04), Seiten 194-204, XP022077227 ISSN: 1077-3142**
• **ZEHANG SUN ET AL: "A real-time precrash vehicle detection system" APPLICATIONS OF COMPUTER VISION, 2002. (WACV 2002). PROCEEDINGS. SIXTH IEEE WORKSHOP ON 3-4 DEC. 2002, PISCATAWAY, NJ, USA,IEEE, 3. Dezember 2002 (2002-12-03), Seiten 171-176, XP010628744 ISBN: 0-7695-1858-3**
• **YAJUN FANG ET AL: "Comparison between infrared-image-based and visible-image-based approaches for pedestrian detection" INTELLIGENT VEHICLES SYMPOSIUM, 2003. PROCEEDINGS. IEEE JUNE 9-11, 2003, PISCATAWAY, NJ, USA,IEEE, 9. Juni 2003 (2003-06-09), Seiten 505-510, XP010645929 ISBN: 0-7803-7848-2**

**Beschreibung**

Die Erfindung betrifft ein Verfahren zur Detektion eines insbesondere auf einer Fahrbahn befindlichen Objektes, insbesondere Fußgängers, in der Umgebung im Sichtbereich eines an einem Träger wie insbesondere einem Fahrzeug angebrachten optischen Sensors, bei dem aus dem Sichtbereich des optischen Sensors ein unterhalb des Horizontes liegender relevanter Raumbereich bestimmt wird,
mittels des optischen Sensors ein Graustufenbild erzeugt wird, das einen dem relevanten Raumbereich entsprechenden relevanten Bildbereich umfasst und zur Erfassung des Objektes nur in diesem dem unterhalb des Horizontes liegenden relevanten Raumbereich entsprechenden relevanten Bildbereich nach einem möglichen Objekt gesucht wird. Ein Verfahren dieser Art ist bekannt aus der Veröffentlichung MA, GUANGLIN; PARK, SU-BIRM; IOFFE, ALEXANDER; MULLER-SCHNEIDERS, STEFAN; KUMMERT, ANTON: "A Real Time Object Detection Approach Applied to Reliable Pedestrian Detection" INTELLIGENT VEHICLES SYMPOSIUM, 2007 IEEE, 13. Juni 2007 (2007-06-13), - 15. Juni 2007 (2007-06-15). Seiten 755 - 760, XP002460337.

Bei auf Online-Vision basierenden Hinderniserfassungssystemen besteht ein wesentlicher Vorbearbeitungsschritt für die Hindernisklassifikation in einer bezüglich der Rechenzeit effizienten Erfassung von Bildbereichen, von denen angenommen wird, dass sie die interessierenden Hindernisse enthalten, wodurch der Rechenaufwand insgesamt reduziert und eine robustere Echtzeit-Klassifikationssoftware ermöglicht wird.

Die Hinderniserfassung anhand eines einzigen Graustufenbildes ist insoweit von Vorteil, als sie eine effiziente Berechnung ermöglicht und unabhängig von der Eigenbewegung des das Erfassungssystem aufweisenden Fahrzeuges Änderungen der Lichtintensität usw. ist.

Es existieren verschiedene Anwendungen, bei denen ein- oder zweidimensionale Profile zur Hinderniserfassung erzeugt werden. Bei diesen Anwendungen handelt es sich entweder um Überwachungssysteme oder um Hinderniserfassungssysteme mit Infrarot-Sensoren, bei denen die Kontur der Hindernisse entweder durch eine Hintergrundsubtraktion oder durch den Sensor eindeutig erfasst werden können. Die ein- oder zweidimensionalen Profile dieser Anwendungen können die erfassten Hindernisse eindeutig beschreiben. Dagegen funktioniert ein direktes ein- oder zweidimensionales Profil in einem Graustufenbild aufgrund der Komplexität der Bildszene und Vielfalt der Pixelintensitäten nicht.

Bei dem aus der oben genannten Veröffentlichung bekannten Verfahren wird der zur Objekterfassung verwendete Algorithmus auf einen unterhalb des Horizontes liegenden Bildunterbereich mit einer Höhe von 30 Pixeln angewandt.

Der Erfindung liegt die Aufgabe zugrunde, eine Möglichkeit anzugeben, den Rechenaufwand zur Erfassung eines insbesondere auf einer Fahrbahn befindlichen Objektes insbesondere, Fußgängers, zu reduzieren und/oder die Robustheit einer solchen Erfassung zu erhöhen.

Gemäß der Erfindung wird diese Aufgabe gelöst durch ein Verfahren zur Detektion eines insbesondere auf einer Fahrbahn befindlichen Objektes, insbesondere Fußgängers, in der Umgebung im Sichtbereich eines an einem Träger wie insbesondere einem Fahrzeug angebrachten optischen Sensors, bei dem aus dem Sichtbereich des optischen Sensors ein unterhalb des Horizontes liegender relevanter Raumbereich bestimmt wird, mittels des optischen Sensors ein Graustufenbild erzeugt wird, das einen dem relevanten Raumbereich entsprechenden relevanten Bildbereich umfasst, zur Erfassung des Objektes nur in diesem dem unterhalb des Horizontes liegenden relevanten Raumbereich entsprechenden relevanten Bildbereich nach einem möglichen Objekt gesucht wird, für jede Spalte von Pixeln innerhalb des relevanten Bildbereichs des Graustufenbildes die Grauwerte aufsummiert oder aufintegriert werden und die obere Hüllkurve des spaltenweise aufintegrierten Grauwertsignals erzeugt und die Differenz zwischen der Hüllkurve und dem spaltenweise aufintegrierten Grauwertsignal gebildet wird, um dadurch ein die vertikale Orientierung in dem relevanten Bildbereich des Graustufenbildes repräsentierendes eindimensionales Profil zu erhalten. Dabei wird die Differenz vorzugsweise mittels eines Tiefpassfilters gebildet.

Bevorzugt wird dabei als relevanter Bildbereich des Graustufenbildes ein insbesondere schmaler horizontaler Streifen unterhalb des Horizontes gewählt.

Bei der Suche nach einem möglichen Objekt innerhalb des relevanten Bildbereichs des Graustufenbildes wird vorteilhafterweise nach wenigstens einem für eine vertikale Orientierung repräsentativen Merkmal gesucht.

Es ist insbesondere von Vorteil, wenn die Werte des eindimensionalen Profils mit einem Schwellenwert verglichen werden und ein jeweiliger Wert des eindimensionalen Profils, der oberhalb des Schwellenwertes liegt, als Indiz für eine anfängliche Objekterfassung herangezogen wird.

In dem relevanten Bildbereich des Graustufenbildes kann dann für jede anfängliche Objekterfassung eine insbesondere binäre vertikale Kante extrahiert werden. Die extrahierte vertikale Kante wird dann vorzugsweise einer morphologischen Operation unterzogen, um eine vorgebbare ausgeprägte vertikale Kante zu erhalten.

Vorteilhafterweise wird dann von jeder durch eine jeweilige morphologische Operation erhaltenen vertikalen Kante der unterste Endpunkt aufgesucht und dieser unterste Endpunkt als Fußpunkt des erfassten möglichen Objektes definiert.

Für eine anschließende Objektklassifizierung kann dann ausgehend vom Fußpunkt eine an die Größe des Objektes angepasste Bounding Box definiert werden.

Gegenstand der Erfindung ist zudem ein Computerprogramm mit Programmcode-Mitteln, um das vorstehend beschriebene Verfahren durchzuführen, wenn das Programm auf einem Computer oder einer entsprechenden Recheneinheit ausgeführt wird.

Gegenstand der Erfindung ist auch ein Computerprogrammprodukt mit Programmcodemitteln, die auf einem computerlesbaren Datenträger gespeichert sind, um das vorstehend beschriebene Verfahren durchzuführen, wenn das .Computerprogramm auf einem Computer oder einer entsprechenden Recheneinheit ausgeführt wird.

Unter einem Computer wird hierbei eine beliebige Datenverarbeitungsvorrichtung verstanden, mit der das Verfahren ausgeführt werden kann. Dabei kann eine solche Datenverarbeitungsvorrichtung insbesondere digitale Signalprozessoren und/oder Mikroprozessoren umfassen, mit denen das Verfahren ganz oder in Teilen ausgeführt wird.

Schließlich ist Gegenstand der Erfindung auch eine Vorrichtung zur Detektion eines insbesondere auf einer Fahrbahn befindlichen Objektes, insbesondere Fußgängers, in der Umgebung im Sichtbereich eines an einem Träger wie insbesondere einem Fahrzeug angebrachten optischen Sensors, mit einer Datenverarbeitigseinrichtung, die zur Durchführung des vorstehend beschriebenen Verfahrens ausgebildet ist.

Anders als bei dem eingangs genannten, auf einem ein- oder zweidimensionalen Profil basierenden bekannten Extraktionsalgorithmus kann aufgrund der erfindungsgemäßen Lösung ein eindimensionales Profil direkt aus dem relevanten Bildbereich des Graustufenbildes ohne irgendeine Vorverarbeitung des Bildes erzeugt werden. Eine Entscheidung darüber, ob in der Szene ein Hindernis vorhanden ist oder nicht, kann durch eine Auswertung des erzeugten eindimensionalen Profils getroffen werden.

Zur Verbesserung der Recheneffizienz kann der zur Erfassung herangezogene relevante Bereich (region of interest) in einem schmalen horizontalen Streifen unterhalb des Horizontes festgelegt werden. Die Höhe des Streifens kann beispielsweise 30 Pixel in einer Monokamera vom Typ VGA (640 x 480) betragen. Der Streifen kann beispielsweise 10 Pixel unterhalb des Horizontes angeordnet sein. Indem der Streifen beispielsweise 10 Pixel unterhalb des Horizontes festgelegt wird, ist der relevante Erfassungsbereich nur auf die Bodenfläche fokussiert, und es wird nur oberhalb dieser Bodenfläche nach Objekten gesucht. Ein Vorteil der erfindungsgemäßen Lösung besteht insbesondere darin, dass angesichts des definierten relevanten Suchbereichs eine Betrachtung des komplexen Hintergrunds im Horizontalbereich unterbleibt und nur Objekte bzw. Fußgänger im einfachen bodenflächennahen Hintergrund betrachtet werden.

Innerhalb des definierten Objekt- bzw. Fußgängererfassungsstreifens wird nach einem für eine starke vertikale Ausrichtung repräsentativen Merkmal des Objektes bzw. Fußgängers gesucht, um Objekt- bzw. Fußgängerkandidaten zu erfassen. Anders als bei den bisher üblichen Erfassungsalgorithmen kann direkt auf das originale Grauwertbild zugegriffen werden. Es können die Grauwerte einer jeden Spalte in dem Objekt- bzw. Fußgängererfassungsstreifen aufsummiert oder aufintegriert werden.

Es kann dann die obere Hüllkurve des spaltenweise integrierten Signals beispielsweise durch ein Tiefpassfilter erzeugt werden, woraufhin eine absolute Subtraktion zwischen der Hüllkurve und dem spaltenweise integrierten Signal durchgeführt werden kann.

Die Subtraktion führt zu dem eindimensionalen Profil des Objekt- bzw. Fußgängererfassungsstreifens, das die Vertikale des Graubildes in dem Erfassungsstreifen repräsentiert. Die Werte des eindimensionalen Profils können dann mit einer Schwelle verglichen werden, um jedes oberhalb der Schwelle liegende Signal in dem eindimensionalen Profil als anfängliche Erfassung auszuwählen.

Es kann dann insbesondere eine binäre vertikale Kante in dem definierten Erfassungsstreifen aus jeder initialen Erfassung extrahiert werden. Danach kann die insbesondere binäre vertikale Kante einer morphologischen Operation unterworfen werden, um nur ausgeprägte oder große vertikale Kanten zu erhalten.

Es kann dann der unterste Endpunkt des Ergebnisses der morphologischen Operation in jedem relevanten Bereich aufgesucht und der aufgefundene Endpunkt als Fußpunkt des erfassten Objekt- bzw. Fußgängerkandidaten definiert werden.

Es kann dann ausgehend von dem aufgefundenen Fußpunkt ein an die Größe des Objektes bzw. Fußgängers angepasste Bounding Box erzeugt werden, die zur weiteren Verarbeitung in den Klassifizierer eingegeben werden kann.

Im Gegensatz zu herkömmlichen Verfahren zur Erfassung von Fußgängerkandidaten ermöglicht die erfindungsgemäße Lösung somit eine direkte Bearbeitung eines Grauwertbildes in einem kleinen Bereich, wobei die Bearbeitung zudem wesentlich schneller ist.

Die Erfindung wird im Folgenden anhand von Ausführungsbeispielen unter Bezugnahme auf die Zeichnung näher erläutert; in dieser zeigen:

Fig. 1   eine schematische Darstellung eines möglichen relevanten Raumbereichs, auf dem die Objekt- bzw. Fußgängererfassung beschränkt wird,

Fig. 2   den dem relevanten Raumbereich gemäß Fig. 1 entsprechenden relevanten Bildbereich des Graufstufenbildes,

Fig. 3   ein Diagramm, in dem ein beispielhafter Verlauf des spaltenweise aufintegrierten Grauwertsignals, dessen obere Hüllkurve und die das eindimensionale Profil bildende Differenz zwischen der oberen Hüllkurve und dem spaltenweise aufintegrierten Grauwertsignal wiedergegeben sind,

Fig. 4  das eindimensionale Profil gemäß Fig. 4 mit zugeordnetem Schwellenwert und anhand der anfänglichen Objekterfassung erfasste mögliche Objekte bzw. Fußgänger,

Fig. 5  eine schematische Darstellung der Suche nach dem Fußpunkt eines erfassten möglichen Objektes bzw. Fußgängers und

Fig. 6  eine schematische Darstellung der Erzeugung einer an die Größe des Objektes bzw. Fußgängers angepassten Bounding Box.

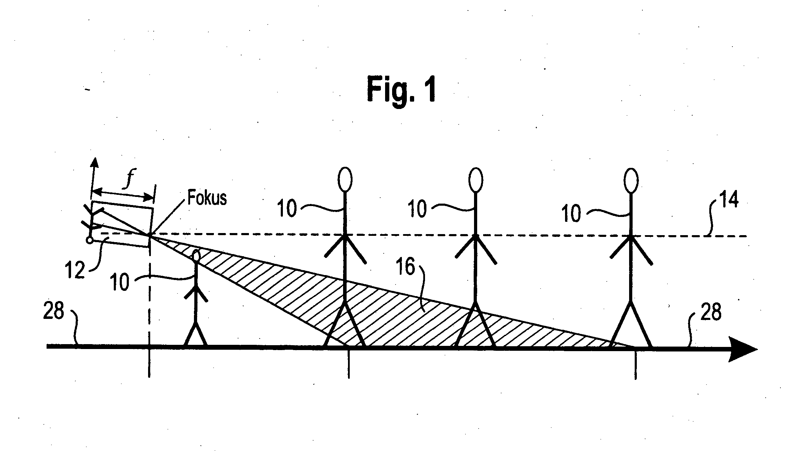

In den Fig. 1 bis 6 ist eine rein beispielhafte Ausgestaltung eines Verfahrens zur Detektion eines insbesondere auf einer Fahrbahn befindlichen Objektes 10, insbesondere Fußgängers, in der Umgebung im Sichtbereich eines an einem Träger wie insbesondere einem Fahrzeug angebrachten optischen Sensors 12 wiedergegeben.

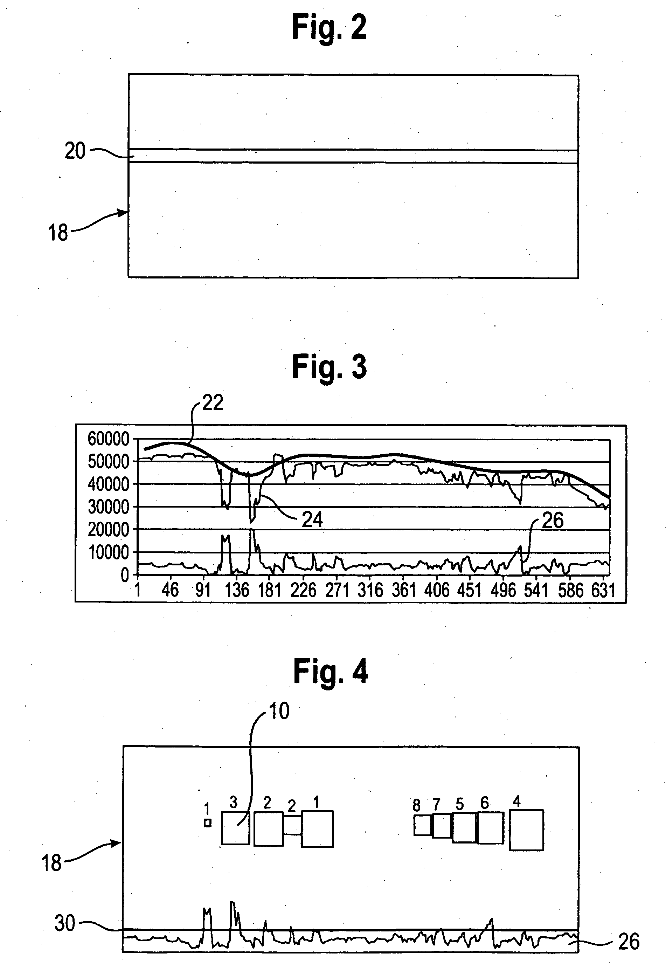

Dabei wird aus dem Sichtbereich des optischen Sensors 12 ein unterhalb des Horizontes 14 liegender relevanter Raumbereich 16 bestimmt (vgl. insbesondere Fig. 1). Mittels des optischen Sensors 12 wird ein Graustufenbild 18 erzeugt (vgl. insbesondere die Fig. 1 und 4 bis 6), das einen den relevanten Raumbereich 16 entsprechenden relevanten Bildbereich 20 umfasst (vgl. insbesondere Fig. 2). Zur Erfassung des Objektes 10 wird dann nur in diesem dem unterhalb des Horizontes 14 liegenden relevanten Raumbereich 16 entsprechenden relevanten Bildbereich 20 nach einem möglichen Objekt 10 gesucht. Wie bereits erwähnt, kann es sich bei den betreffenden Objekten 10 insbesondere um Fußgänger handeln.

Fig. 1 zeigt in schematischer Darstellung einen möglichen relevanten Raumbereich 16, auf den die Objekt- bzw. Fußgängererfassung beschränkt ist. In Fig. 2 ist der dem relevanten Raumbereich 16 gemäß Fig. 1 entsprechende relevante Bildbereich 20 des Graustufenbildes 18 dargestellt. Wie insbesondere anhand dieser Fig. 2 zu erkennen ist, kann es sich bei dem relevanten Bildbereich 20 insbesondere um einen schmalen horizontalen Streifen unterhalb des Horizontes 14 (vgl. auch Fig. 1) handeln.

Bei der Suche nach einem möglichen Objekt 10 innerhalb des relevanten Bildbereichs 20 des Graustufenbildes 18 wird nach wenigstens einem für eine vertikale Orientierung repräsentativen Merkmal gesucht.

Dabei können beispielsweise für jede Spalte von Pixeln innerhalb des relevanten Bildbereichs 20 des Graustufenbildes 18 die Grauwerte aufsummiert oder aufintegriert werden. Es kann dann die obere Hüllkurve 22 des spaltenweise aufintegrierten Grauwertsignals 24 erzeugt und beispielsweise mittels eines Tiefpassfilters die Differenz 26 zwischen der Hüllkurve 22 und dem spaltenweise aufintegrierten Grauwertsignal 24 gebildet werden, um dadurch ein die vertikale Orientierung in dem relevanten Bildbereich 20 des Graustufenbildes 18 repräsentierendes eindimensionales Profil zu erhalten.

Fig. 3 zeigt ein Diagramm, in dem ein beispielhafter Verlauf des spaltenweise aufintegrierten Grauwertsignals 24, dessen obere Hüllkurve 22 und die das eindimensionale Profil bildende Differenz 26 zwischen der oberen Hüllkurve 22 und dem spaltenweise aufintegrierten Grauwertsignal 24 wiedergegeben sind.

Bei dem interessierenden Erfassungsbereich kann es sich also um einen schmalen horizontalen Streifen unterhalb des Horizontes handeln. Die Höhe des Streifens kann beispielsweise 30 Pixel in einer den optischen Sensor 12 bildenden Monokamera beispielsweise vom Typ VGA (640 x 480) betragen. Der Streifen kann beispielsweise 10 Pixel unterhalb des Horizontes angeordnet sein. Indem der Streifen beispielsweise 10 Pixel unterhalb des Horizontes angesetzt wird, ist der relevante Erfassungsbereich oder Raumbereich 16 nur auf die Grundfläche 28 bzw. Fahrbahn gerichtet (vgl. insbesondere Fig. 1). Mit einem solchen interessierenden Suchbereich wird eine Betrachtung des komplexen Hintergrundes im Horizontbereich vermieden. Es müssen nur Objekte 10 bzw. Fußgänger gegenüber einem einfachen, durch die Grundfläche 28 bestimmen Hintergrund betrachtet werden.

Wie sich insbesondere aus den Fig. 2 und 3 ergibt, wird innerhalb des definierten Objekt- bzw. Fußgängererfassungsstreifens, das heißt innerhalb des streifenartigen Bildbereichs 20 nach wenigstens einem für eine starke vertikale Orientierung repräsentativen Merkmal gesucht, um ein mögliches Objekt 10 oder Objektkandidaten zu erfassen. Dabei wird direkt auf das ursprüngliche Grauwertbild zugegriffen. In dem streifenartigen relevanten Bildbereich 20 werden die Grauwerte einer jeden Spalte beispielsweise entsprechend der folgenden Gleichung aufsummiert oder aufintegriert:

$$p_u = \sum_v I_{uv} \, ,$$

wobei u die horizontale Koordinate des relevanten Bildbereichs 20, und v die vertikale Koordinate des relevanten Bildbereichs 20 ist.

Da das Bild bevorzugt binär erzeugt ist, besitzt die Pixelintensität I entweder den Wert 0 oder den Wert 255.

Durch eine absolute Subtraktion zwischen dem originalen spaltenweise aufintegrierten Grauwertsignal 24 und dessen oberer Hüllkurve 22 erhält man also mit der betreffenden Differenz 26 ein eindimensionales Profil, das für eine vertikale Orientierung repräsentativ ist.

Wie insbesondere anhand von Fig. 4 zu erkennen ist, können die Werte des eindimensionalen Profils, das heißt der Differenz 26 mit einem Schwellenwert 30 verglichen werden. Ein jeweiliger Wert des eindimensionalen Profils, der oberhalb des Schwellenwertes 30 liegt, kann dann als Indiz für eine anfängliche Objekterfassung herangezogen werden. Das heißt, ein jeweiliges Objekt 10 kann dann als anfänglich erfasst angesehen werden, wenn der betreffende Wert des eindimensionalen Profils oberhalb des Schwellenwertes 30 liegt. In der Fig. 4 sind anfänglich erfasste Objekte 10 jeweils von einem Rechteck umrahmt.

Das Erfassungsergebnis des zuvor erwähnten eindimensionalen Profils repräsentiert lediglich die horizontale Position des Objekt- bzw. Fußgängerkandidaten. Es liegt also noch keine Information über die Größe oder Tiefe des erfassten Objektes vor.

Um nun die korrekte Größe des erfassten Objektkandidaten zu erhalten, kann beispielsweise wie folgt vorgegangen werden:

Von jeder erfassten Stelle auf dem eindimensionalen Profil wird ein kleiner relevanter Bereich unterhalb der erfassten Stelle definiert, und es wird innerhalb dieses definierten relevanten Bereichs eine binäre vertikale Kante extrahiert. Das Bild der binären vertikalen Kante wird einer vertikalen morphologischen Operation unterworfen, um nur noch große vertikal orientierte Kanten zu erhalten.

In dem relevanten Bildbereich 20 des Graustufenbildes 18 kann also für jede anfängliche Objekterfassung eine insbesondere binäre vertikale Kante extrahiert werden, die dann einer morphologischen Operation unterzogen wird, um eine vorgebbar ausgeprägte vertikale Kante zu erhalten.

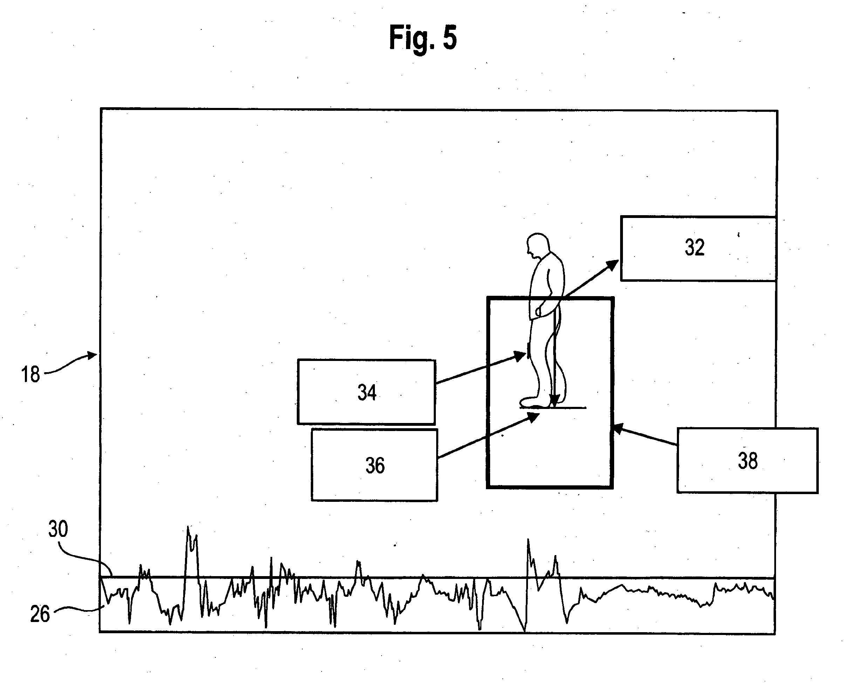

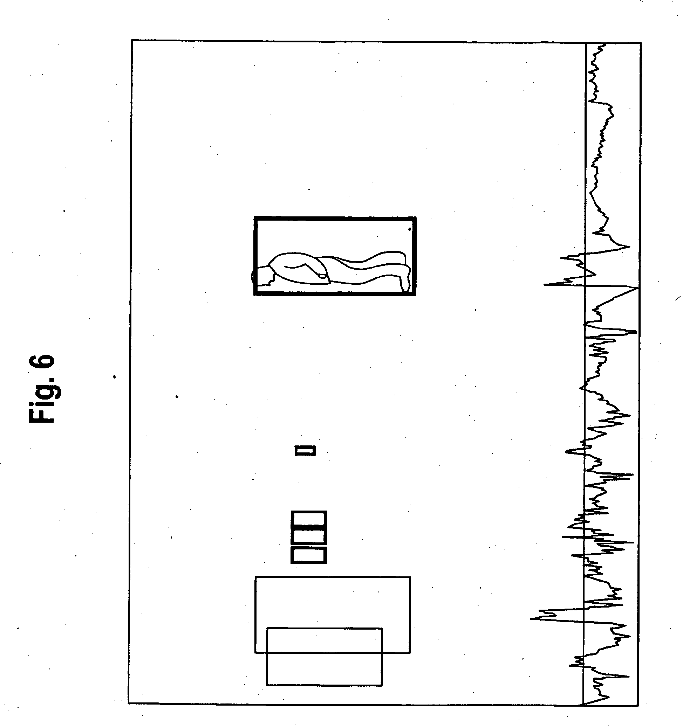

Fig. 5 zeigt eine schematische Darstellung der Suche nach einen Fußpunkt eines erfassten möglichen Objektes 10 bzw. Fußgängers, während in Fig. 6 die Erzeugung einer an die Größe des Objektes 10 bzw. Fußgängers angepassten Bounding Box schematisch dargestellt ist.

So kann von jeder anfänglich erfassten Stelle 32 des eindimensionalen Profils (vgl. Fig. 5) der unterste Endpunkt des Ergebnisses 34 der morphologischen Operation (vgl. insbesondere nochmals Fig. 5) in dem darunterliegenden relevanten Bereich aufgesucht werden. Der aufgefundene Endpunkt wird dann als Fußpunkt 36 des erfassten Objekt- oder Fußgängerkandidaten definiert. Ausgehend von dem aufgefundenen Fußpunkt 36 kann dann eine an die Größe des Objektes bzw. Fußgängers angepasste Bounding Box (vgl. Fig. 5) erzeugt werden.

Es kann also beispielsweise von jeder durch eine jeweilige morphologische Operation erhaltenen vertikalen Kante der unterste Endpunkt aufgesucht und dieser unterste Endpunkt als Fußpunkt 36 des erfassten möglichen Objektes bzw. Fußgängers definiert werden. Für eine anschließende Objektklassifizierung kann dann ausgehend vom Fußpunkt 36 eine an die Größe des Objektes 10 bzw. Fußgängers angepasste Bounding Box definiert werden.

**Bezugszeichenliste**

| | |
|---|---|
| 10 | Objekt, Fußgänger |
| 12 | optischer Sensor, Kamera |
| 14 | Horizont |
| 16 | relevanter Raumbereich |
| 18 | Graustufenbild |
| 20 | relevanter Bildbereich |
| 22 | obere Hüllkurve |
| 24 | spaltenweise aufintegriertes Grauwertsignal |
| 26 | Differenz, eindimensionales Profil |
| 28 | Grundfläche, Fahrbahn |
| 30 | Schwellenwert |
| 32 | anfänglich erfasste Stelle |
| 34 | Ergebnis der morphologischen Operation |
| 36 | Fußpunkt |
| 38 | Bounding Box |

**Patentansprüche**

1. Verfahren zur Detektion eines insbesondere auf einer Fahrbahn befindlichen Objektes (10), insbesondere Fußgängers, in der Umgebung im Sichtbereich eines an einem Träger wie insbesondere einem Fahrzeug angebrachten optischen Sensors (12), bei dem aus dem Sichtbereich des optischen Sensors (12) ein unterhalb des Horizontes (14) liegender relevanter Raumbereich (16) bestimmt wird, mittels des optischen Sensors (12) ein Graustufenbild (18) erzeugt wird, das einen dem relevanten Raumbereich (16) entsprechenden relevanten Bildbereich (20) umfasst, und zur Erfassung des Objektes (10) nur in diesem dem unterhalb des Horizontes (14) liegenden relevanten Raumbereich (16) entsprechenden relevanten Bildbereich (20) nach einem möglichen Objekt (10) gesucht wird, **dadurch gekennzeichnet, dass** zur Detektion des Objektes für jede Spalte von Pixeln innerhalb des relevanten Bildbereichs (20) des Graustufenbildes (18) die Grauwerte aufsummiert oder aufintegriert werden und dass die obere Hüllkurve (22) des spaltenweise aufintegrierten Grauwertsignals (24) erzeugt und die Differenz (26) zwischen der Hüllkurve (22) und dem spaltenweise aufintegrierten Grauwertsignal (24) gebildet wird, um dadurch ein die vertikale Orientierung in dem relevanten Bildbereich (20) des Graustufenbildes (18) repräsentierendes eindimensionales Profil zu erhalten.

2. Verfahren nach Anspruch 1, **dadurch gekennzeichnet, dass** die Differenz (26) mittels eines Tiefpassfilters gebildet wird.

**3.** Verfahren nach Anspruch 1 oder 2,
**dadurch gekennzeichnet,**
**dass** als relevanter Bildbereich (20) des Graustufenbildes (18) ein insbesondere schmaler horizontaler Streifen unterhalb des Horizontes (14) gewählt wird.

**4.** Verfahren nach einem der vorhergehenden Ansprüche,
**dadurch gekennzeichnet,**
**dass** bei der Suche nach einem möglichen Objekt (10) innerhalb des relevanten Bildbereichs (20) des Graustufenbildes (18) nach wenigstens einem für eine vertikale Orientierung repräsentativen Merkmal gesucht wird.

**5.** Verfahren nach einem der vorhergehenden Ansprüche,
**dadurch gekennzeichnet,**
**dass** die Werte des eindimensionalen Profils mit einem Schwellenwert (30) verglichen werden und ein jeweiliger Wert des eindimensionalen Profils, der oberhalb des Schwellenwertes (30) liegt, als Indiz für eine anfängliche Objekterfassung herangezogen wird.

**6.** Verfahren nach Anspruch 5,
**dadurch gekennzeichnet,**
**dass** in dem relevanten Bildbereich (20) des Graustufenbildes (18) für jede anfängliche Objekterfassung eine insbesondere binäre vertikale Kante extrahiert und die extrahierte vertikale Kante einer morphologischen Operation unterzogen wird, um eine vorgebbar ausgeprägte vertikale Kante zu erhalten.

**7.** Verfahren nach Anspruch 6,
**dadurch gekennzeichnet,**
**dass** von jeder durch eine jeweilige morphologische Operation erhaltenen vertikalen Kante der unterste Endpunkt aufgesucht und dieser unterste Endpunkt als Fußpunkt (36) des erfassten möglichen Objektes (10) definiert wird.

**8.** Verfahren nach Anspruch 7,
**dadurch gekennzeichnet,**
**dass** für eine anschließende Objektklassifizierung ausgehend vom Fußpunkt (36) eine an die Größe des Objektes angepasste Bounding Box definiert wird.

**9.** Computerprogramm mit Programmcodemitteln zur Durchführung des Verfahrens nach einem der Ansprüche 1 bis 8, wenn das Computerprogramm auf einem Computer oder einer entsprechenden Recheneinheit ausgeführt wird.

**10.** Computerprogrammprodukt mit Programmcodemitteln, die auf einem computerlesbaren Datenträger gespeichert sind, zur Durchführung des Verfahrens nach einem der Ansprüche 1 bis 8, wenn das Computerprogramm auf einem Computer oder einer entsprechenden Recheneinheit ausgeführt wird.

**11.** Vorrichtung zur Detektion eines insbesondere auf einer Fahrbahn befindlichen Objektes, insbesondere Fußgängers, in der Umgebung im Sichtbereich eines an einem Träger wie insbesondere einem Fahrzeug angebrachten optischen Sensors, mit einer Datenverarbeitungseinrichtung, die zur Durchführung des Verfahrens nach einem der Ansprüche 1 bis 8 ausgebildet ist.

**Claims**

**1.** A method for detecting an object (10), in particular on a road, in particular a pedestrian, in the surroundings in the range of view of an optical sensor (12) attached to a carrier, in particular a vehicle, wherein from the range of view of the optical sensor (12) a relevant spatial region (16) below the horizon (14) is determined,
a gray scale image (18) is generated by means of the optical sensor (12) which includes a relevant image region (20) corresponding to the relevant spatial region (16), and
for detection of the object (10), a search for a possible object (10) is only performed in said relevant image region (20) corresponding to the relevant spatial region (16) below the horizon (14),
**characterized in that** for detection of the object for each column of pixels within the relevant image region (20) of the gray scale image (18) the grey values are added or integrated and that the upper envelope (22) of the column-wise integrated gray value signal (24) is generated and the difference (26) between the envelope (22) and the column-wise integrated grey value signal (24) is formed such as to obtain a one-dimensional profile representing the vertical orientation in the relevant image region (20) of the gray scale image (18).

**2.** A method according to claim 1,
**characterized in that**
the difference (26) is formed by means of a low pass filter.

**3.** A method according to claim 1 or 2,
**characterized in that**
a horizontal strip, in particular narrow horizontal strip, below the horizon (14) is selected as relevant image region (20) of the gray scale image (18).

**4.** A method according to one of the preceding claims,
**characterized in that**
when searching for a possible object (10) within the relevant image region (20) of the gray scale image (18) at least one feature representative of a vertical orientation is searched.

5. A method according to one of the preceding claims, **characterized in that**
the values of the one-dimensional profile are compared with a threshold value (30) and a respective value of the one-dimensional profile above the threshold value (30) is used as an indication for an initial object detection.

6. A method according to claim 5, **characterized in that**
a vertical edge, in particular binary vertical edge, is extracted for each initial object detection within the relevant image region (20) of the gray scale image (18), and the extracted vertical edge is subjected to a morphological operation for obtaining a presettably distinct vertical edge.

7. A method according to claim 6, **characterized in that**
the lowest end point of each vertical edge, obtained with a respective morphological operation, is located and said lowest end point is defined as a base point (36) of the detected possible object (10).

8. A method according to claim 7, **characterized in that**
starting from the base point (36) a bounding box is defined for a subsequent object classification, the bounding box adapted to the size of the object.

9. Computer program having program code means for performing the method according to one of the claims 1 to 8 when the computer program is executed on a computer or a suitable computer unit.

10. Computer program product having program code means stored on a computer readable data carrier for performing the method according to one of the claims 1 to 8 when the computer program is executed on a computer or a suitable computer unit.

11. Device for detecting an object, in particular on a road, in particular a pedestrian, in the surroundings in the range of view of an optical sensor attached to a carrier, in particular a vehicle, having a data processing unit adapted for performing the method according to one of the claims 1 to 8.

**Revendications**

1. Procédé pour la détection d'un objet (10) qui se trouve en particulier sur une voie de circulation, en particulier d'un piéton, dans les alentours dans la région de vision d'un capteur optique (12) monté sur un support, comme en particulier un véhicule automobile, dans lequel on détermine à partir de la région de vision du capteur optique (12) une plage spatiale pertinente (16) située au-dessous de l'horizon (14), au moyen du capteur optique (12) on engendre une image en niveaux de gris (18), qui englobe une région d'image pertinente (20) correspondant à la plage spatiale pertinente (16), et
pour détecter l'objet (10) on recherche un objet possible (10) uniquement dans cette région d'image pertinente (20) correspondant à cette plage spatiale pertinente (16) située au-dessous de l'horizon (14), **caractérisé en ce que**, pour la détection de l'objet, pour chaque colonne de pixels à l'intérieur de la région d'image pertinente (20) de l'image en niveaux de gris (18) on procède à une somme ou à une intégration des valeurs de gris, et **en ce que** la courbe enveloppe supérieure (22) du signal de valeur de gris (21) intégré par colonne est engendrée, et on forme la différence (26) entre la courbe enveloppe (22) et le signal de valeur de gris (24) intégré par colonne, afin d'obtenir grâce à cela un profil unidimensionnel représentant l'orientation verticale dans la région d'image pertinente (20) de l'image en niveaux de gris (18).

2. Procédé selon la revendication 1, **caractérisé en ce que** l'on forme la différence (26) au moyen d'un filtre passe-bas.

3. Procédé selon la revendication 1 ou 2, **caractérisé en ce que** l'on choisit comme région d'image pertinente (20) de l'image en niveaux de gris (18) une bande horizontale, en particulier étroite, au-dessous de l'horizon (14).

4. Procédé selon l'une des revendications précédentes, **caractérisé en ce que** pour la recherche d'un objet possible (10) à l'intérieur de la région d'image pertinente (20) de l'image en niveaux de gris (18), on recherche au moins une caractéristique représentative pour une orientation verticale.

5. Procédé selon l'une des revendications précédentes, **caractérisé en ce que** les valeurs du profil monodimensionnel sont comparées à une valeur seuil (30), et on utilise une valeur respective du profil monodimensionnel qui est située au-dessus de la valeur seuil (30) à titre d'indice pour un début de détection d'objet.

6. Procédé selon la revendication 5, **caractérisé en ce que** pour tout début de détection d'objet on extrait dans la région d'image pertinente (20) de l'image en niveaux de gris (18) une arête verticale en particulier binaire, et l'arête verticale extraite est soumise à une opération morphologique afin d'obtenir une arête verticale marquée prédéterminée.

7.  Procédé selon la revendication 6, **caractérisé en ce que** l'on recherche le point terminal le plus bas dans chaque arête verticale obtenue par une opération morphologique respective, et ce point terminal le plus bas est défini comme étant le point au pied (36) de l'objet possible (10) détecté.

8.  Procédé selon la revendication 7, **caractérisé en ce que** pour procéder ensuite à une classification d'objet, on définit en partant du point au pied (36) de l'objet une boîte enveloppe adaptée à la taille de l'objet.

9.  Programme d'ordinateur comprenant des moyens formant code de programme pour la mise en oeuvre du procédé selon l'une des revendications 1 à 8 quand le programme d'ordinateur est exécuté sur un ordinateur ou sur une unité de calcul correspondante.

10. Produit formant programme d'ordinateur comprenant des moyens formant code de programme qui sont mémorisés sur un support de données lisible à l'ordinateur, pour la mise en oeuvre du procédé selon l'une des revendications 1 à 8 quand le programme d'ordinateur est exécuté sur un ordinateur ou sur une unité de calcul correspondante.

11. Dispositif pour la détection d'un objet qui se trouve en particulier sur une voie de circulation, en particulier d'un piéton, dans les alentours dans la plage de vision d'un capteur optique monté sur un support, comme en particulier un véhicule automobile, avec un système de traitement de données qui est réalisé pour la mise en oeuvre du procédé selon l'une des revendications 1 à 8.

Fig. 1

# Fig. 2

# Fig. 3

# Fig. 4

# Fig. 5

EP 2 037 407 B1

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MA, GUANGLIN ; PARK, SU-BIRM ; IOFFE, ALEXANDER ; MULLER-SCHNEIDERS ; STEFAN ; KUMMERT, ANTON.** A Real Time Object Detection Approach Applied to Reliable Pedestrian Detection. *INTELLIGENT VEHICLES SYMPOSIUM, 2007 IEEE,* 13. Juni 2007, 755-760